# EUROPEAN PATENT SPECIFICATION

(11) **EP 3 128 729 B1**
(45) Date of publication and mention of the grant of the patent: **27.02.2019**
(21) Application number: 14903970.3
(22) Date of filing: 16.10.2014
(51) Int. Cl.: H04M 3/42, H04M 7/00, H04M 3/06, H04M 3/436, H04M 3/14

(54) **CALL INCOMING APPARATUS AND METHOD**
VORRICHTUNG UND VERFAHREN FÜR EINGEHENDE ANRUFE
PROCÉDÉ ET APPAREIL D'APPEL ENTRANT

(43) Date of publication of application: 08.02.2017
(73) Proprietor: HUAWEI TECHNOLOGIES CO., LTD., Shenzhen Guangdong 518129 (CN)
(72) Inventor: ZHANG, Xigang, Shenzhen, Guangdong 518129 (CN)
(74) Representative: Gill Jennings & Every LLP
(86) International application number: PCT/CN2014/088760
(87) International publication number: WO 2016/058167

(56) References cited:
- EP-A2- 0 878 945
- CN-A- 1 185 694
- CN-A- 101 159 983
- CN-A- 101 534 361
- CN-A- 103 167 203
- US-A- 4 939 777
- US-A- 5 138 652
- US-A1- 2006 140 171

## Description

### TECHNICAL FIELD

The present invention relates to the telecommunications field, and in particular, to an processing apparatus and method.

### BACKGROUND

With development of telecommunications technologies, digital terminal devices, such as an integrated access device (Integrated Access Device, IAD) and an optical network unit (Optical Network Unit, ONU for short), have entered thousands of households on a large scale. A digital terminal device can provide, by connecting to a device such as a fixed-line phone or a personal computer, a user with services including broadband network access, wireless Wi-Fi, and voice conversation. When the fixed-line phone is used to perform voice communication, and a call is incoming, generally the user needs to first pick up the phone, then perform a normal conversation, and hang up the phone at the end of the conversation.

However, at present, when the user uses the fixed-line phone to perform an operation, at the end of a conversation, the phone is not normally hung up. For example, although a telephone receiver is laid down, the telephone receiver does not compact a hookswitch, and in this case, the fixed-line phone is still in an off-hook state.

In the prior art, when the fixed-line phone is not normally hung up, generally the digital terminal device sends a howler tone to the fixed-line phone, and plays the howler tone by using the telephone receiver of the fixed-line phone, to remind the user to hang up the phone. If the user still does not hang up the phone, and after the howler tone is played completely, the fixed-line phone enters a mute energy-saving state, where the mute energy-saving state is also referred to as a parking state. Thereafter, when there is an incoming request, the digital terminal device sends, to a calling party, voice signaling, for example, "the phone is in conversation" that indicates that the fixed-line phone is in a "busy" state. Therefore, the incoming request cannot be successfully accessed.

EP 0 878 945 relates to signal-processing method and system for off-hook notification.

### SUMMARY

Embodiments of the present invention provide an incoming call processing apparatus and method, so as to resolve a problem in the prior art that after a fixed-line phone enters a parking state, an incoming request cannot be successfully accessed if a user still does not hang up the phone.

According to a first aspect, the present invention provides an processing apparatus, where the apparatus is applied to a digital terminal device, the digital terminal device is located in a fixed-line phone communications system, the fixed-line phone communications system includes a fixed-line phone and the digital terminal device connected to the fixed-line phone, and the fixed-line phone performs voice communication by using the digital terminal device, the apparatus including: a network module, configured to receive an incoming request; and a processor, configured to: determine whether the fixed-line phone is in a parking state when the network module received an incoming request; and when the fixed-line phone is in the parking state, the processor configured to: allocate a communication resource to the fixed-line phone, send a prompt tone to the fixed-line phone, and feed back an answer message to a calling party of the incoming request, wherein the answer message is used to indicate that the incoming request is normally accessed.

The processor is further configured to: obtain a calling number of the incoming request, and feed back a busy signal to the calling party when the calling number exists in a preset phone number list.

With reference to the first aspect, in a first implementation manner of the first aspect, the processor is further configured to: provide a voice service for the fixed-line phone by using the allocated communication resource when received an answer signal fed back from the fixed-line phone in a preset period; or release the allocated communication resource when there is no answer signal fed back from the fixed-line phone in a preset period.

According to a second aspect, the present invention provides an incoming call processing method, where the method relates to a fixed-line phone communications system, the system includes a fixed-line phone and a digital terminal device connected to the fixed-line phone, the fixed-line phone performs voice communication by using the digital terminal device, and the method is applied to the digital terminal device, the method including: receiving, by the digital terminal device, an incoming request; and when the fixed-line phone is in a parking state, allocating, by the digital terminal device, a communication resource to the fixed-line phone; sending, by the digital terminal device, a prompt tone to the fixed-line phone; and feeding back, by the digital terminal device, an answer message to a calling party, wherein the answer message is used to indicate that the incoming request is normally accessed.

After the receiving, by the digital terminal device, an incoming request, the method further includes: obtaining, by the digital terminal device, a calling number of the incoming request; determining, by the digital terminal device, whether the calling number exists in a preset phone number list, wherein the preset phone number list is used to record a nuisance call; and feeding back, by the digital terminal device, a busy signal to the calling party when the calling number exists in the preset phone number list.

With reference to the second aspect, in a first implementation manner of the third aspect, after the sending, by the digital terminal device, a prompt tone to the fixed-line phone, the method further includes: providing, by the digital terminal device, a voice service for the fixed-line phone by using the allocated communication resource when received an answer signal fed back from the fixed-line phone in a preset period; or releasing, by the digital terminal device, a allocated communication resource when there is no answer signal fed back from the fixed-line phone in a preset period.

According to a third aspect, a computer readable medium is provided, where the computer readable medium stores a program, and when the program is executed, steps of the method according to the second aspect or the method according to the first implementation manner of the second aspect are performed.

According to the incoming call processing apparatus and method provided in the present invention, when an incoming request is received, a current state of the fixed-line phone is determined first; even if the fixed-line phone is in a parking state, a communication resource is still allocated to the fixed-line phone; a prompt tone is sent to the fixed-line phone; and an answer message indicating that the incoming request is normally accessed is fed back to the calling party. Compared with the prior art in which when the fixed-line phone is in the parking state, the fixed-line phone is in a "busy" state, and the incoming request cannot be accessed, the present invention can ensure that the incoming request can still be accessed when the fixed-line phone is in the parking state.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of an incoming call processing apparatus according to an embodiment of the present invention;
FIG. 2 is a schematic structural diagram of an incoming call processing apparatus according to an embodiment of the present invention;
FIG. 3 is a schematic structural diagram of an incoming call processing apparatus according to an embodiment of the present invention;
FIG. 4 is a flowchart of an incoming call processing method according to an embodiment of the present invention;
FIG. 5 is a flowchart of an incoming call processing method according to an embodiment of the present invention;
FIG. 6 is a flowchart of an incoming call processing method according to an embodiment of the present invention; and
FIG. 7 is a schematic diagram of an incoming call processing system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

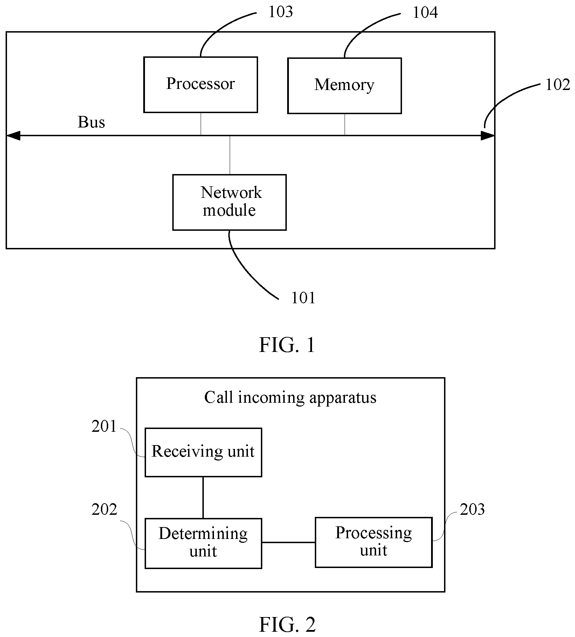

An embodiment of the present invention provides an incoming call processing apparatus, as shown in FIG. 1. The apparatus is applied to a digital terminal device, the digital terminal device is located in a fixed-line phone communications system, the fixed-line phone communications system includes a fixed-line phone and the digital terminal device connected to the fixed-line phone, the fixed-line phone performs voice communication by using the digital terminal device, and the apparatus includes a network module 101, a bus 102, a processor 103, and a memory 104. The network module 101, the processor 103 and the memory 104 are connected to one another by using the bus 102.

The network module 101 is configured to receive an incoming request.

The network module 101 sends the received incoming request to the processor 103 by using the bus 102.

The memory 104 stores a calling number of the incoming request.

The processor 103 is configured to determine whether the fixed-line phone is in a parking state, when the network module 101 receives the incoming request.

When the fixed-line phone is in the parking state, a communication resource is allocated to the fixed-line phone, a prompt tone is sent to the fixed-line phone, and an answer message is fed back to a calling party of the incoming request, where the answer message is used to indicate that the incoming request is normally accessed.

Further, the processor 103 is further configured to: when an answer signal fed back by the fixed-line phone is received in a preset period, provide a voice service for the fixed-line phone by using the allocated communication resource; or
when no answer signal fed back by the fixed-line phone is received in a preset period, release the allocated communication resource.

Further, the processor 103 is further configured to: obtain the calling number of the incoming request stored in the memory 104;
determine whether the calling number exists in a preset phone number list, where the preset phone number list is used to record a nuisance call; and
feed back a busy signal to the calling party, when the calling number exists in the preset phone number list.

Further, the prompt tone sent by the processor 103 to the fixed-line phone is a howler tone, and a period of sending the howler tone is 3 minutes. Optionally, the preset period is equal to that of sending the howler tone.

It should be noted that the processor 103 described in this embodiment of the present invention may be a processor, or may be a collective name of multiple processing elements. For example, the processor 103 may be a central processing unit (Central Processing Unit, CPU for short), or may be an application specific integrated circuit (Application Specific Integrated Circuit, ASIC for short), or may be one or more integrated circuits configured to implement this embodiment of the present invention, for example, one or more digital signal processors (digital signal processor, DSP for short), or one or more field programmable gate arrays (Field Programmable Gate Array, FPGA for short).

The memory 104 may be a storage apparatus, or may be a collective name of multiple storage elements, and is configured to store executable program code. The memory 104 may include a random access memory (RAM), or may include a non-volatile memory (non-volatile memory), for example, a magnetic disk storage, and a flash memory (Flash).

The bus 102 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus 102 may be divided into an address bus, a data bus, a control bus, and the like. For convenience of representation, only a bold line is used for representation in FIG. 1, but it does not represent that there is only one bus or one type of buses.

According to the incoming call processing apparatus provided in this embodiment, when an incoming request is received by the network module, a current state of the fixed-line phone is determined first by the processor; even if the fixed-line phone is in a parking state, a communication resource is still allocated to the fixed-line phone; a prompt tone is sent to the fixed-line phone; and an answer message indicating that the incoming request is normally accessed is fed back to the calling party. Compared with the prior art in which when the fixed-line phone is in the parking state, the fixed-line phone is in a "busy" state, and the incoming request cannot be accessed, the present invention can ensure that the incoming request can still be accessed when the fixed-line phone is in the parking state.

Further, an embodiment of the present invention further provides an incoming call processing apparatus, where the apparatus is applied to a digital terminal device, the digital terminal device is located in a fixed-line phone communications system, the fixed-line phone communications system includes a fixed-line phone and the digital terminal device connected to the fixed-line phone, and the fixed-line phone performs voice communication by using the digital terminal device. As shown in FIG. 2, the apparatus includes:
a receiving unit 201, configured to receive an incoming request;
a determining unit 202, configured to determine whether the fixed-line phone is in a parking state, after the receiving unit 201 receives the incoming request; and
a processing unit 203, configured to: when the determining unit 202 determines that the fixed-line phone is in the parking state, allocate a communication resource to the fixed-line phone; send a prompt tone to the fixed-line phone; and feed back an answer message to a calling party, where the answer message is used to indicate that the incoming request is normally accessed.

Further, the processing unit 203 is further configured to: when an answer signal fed back by the fixed-line phone is received in a preset period, provide a voice service for the fixed-line phone by using the allocated communication resource.

Further, the processing unit 203 is further configured to: when no answer signal fed back by the fixed-line phone is received in a preset period, release the allocated communication resource.

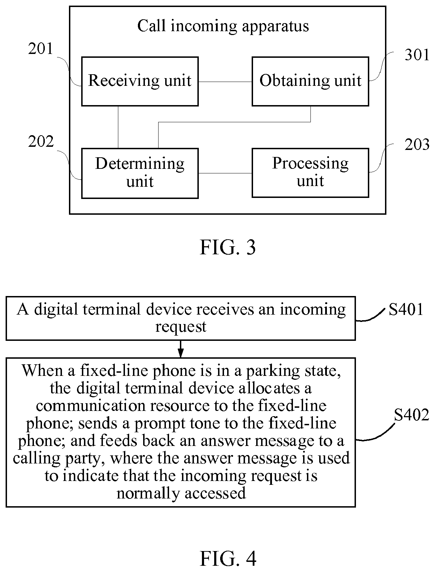

Further, as shown in FIG. 3,
the apparatus further includes an obtaining unit 301, configured to obtain a calling number of the incoming request received by the receiving unit 201;
the determining unit 202 is further configured to determine whether the calling number obtained by the obtaining unit 301 exists in a preset phone number list, where the preset phone number list is used to record a nuisance call; and
the processing unit 203 is further configured to feed back a busy signal to the calling party, when the determining unit 202 determines that the calling number exists in the preset phone number list.

Further, the prompt tone sent by the processing unit 203 is a howler tone, and the preset period is 3 minutes.

According to the incoming call processing apparatus provided in this embodiment, when an incoming request is received by the receiving unit, a current state of the fixed-line phone is determined first by the determining unit; even if the fixed-line phone is in a parking state, a communication resource is still allocated by the processing unit to the fixed-line phone; a prompt tone is sent to the fixed-line phone; and an answer message indicating that the incoming request is normally accessed is fed back to the calling party. Compared with the prior art in which when the fixed-line phone is in the parking state, the fixed-line phone is in a "busy" state, and the incoming request cannot be accessed, this embodiment can ensure that the incoming request can still be successfully accessed when the fixed-line phone is in the parking state.

To resolve the problem in the prior art that an incoming request cannot be accessed when a fixed-line phone is in a parking state, an embodiment of the present invention further provides an incoming call processing method, where the method relates to a fixed-line phone communications system, the system includes a fixed-line phone and a digital terminal device connected to the fixed-line phone, the fixed-line phone performs voice communication by using the digital terminal device, and the method is applied to the digital terminal device. As shown in FIG. 4, the method includes:
S401: A digital terminal device receives an incoming request.

When there is an incoming request, the digital terminal device receives the incoming request, and performs processing on the following step.

S402: When a fixed-line phone is in a parking state, the digital terminal device allocates a communication resource to the fixed-line phone; sends a prompt tone to the fixed-line phone; and feeds back an answer message to a calling party, where the answer message is used to indicate that the incoming request is normally accessed.

The parking state is a state of the fixed-line phone defined in the prior art, and is specifically a state of the fixed-line phone that after a telephone receiver of the fixed-line phone is picked up, the digital terminal device has released the communication resource allocated to the fixed-line phone.

To explain the parking state of the fixed-line phone more clearly, the present invention provides a detailed explanation of states of the fixed-line phone below. Generally, the states of the fixed-line phone include an off-hook state, a dialing state, a conversation state, a parking state, a ringing state, and a on-hook state. The off-hook state, the dialing state, the conversation state, and the ringing state belong to a "busy" state, and the on-hook state may also be referred to as an idle state.

The off-hook state refers to a state of the fixed-line phone that the telephone receiver of the fixed-line phone is picked up and when the telephone receiver of the fixed-line phone is picked up, no incoming request is received and no outgoing request (for example, performing a dialing operation) is sent.

The dialing state refers to the state of the fixed-line phone when a user performs a dialing operation. After the fixed-line phone is in the off-hook state, and when the user performs the dialing operation for sending an outgoing request, the state of the fixed-line phone is migrated from the off-hook state to the dialing state.

The conversation state refers to the state of the fixed-line phone when a call connection is successfully established between the calling party and a called party, and when the user performs voice communication such as receiving voice information or sending voice information by using the fixed-line phone.

The parking state (Parking Status) refers to the state of the fixed-line phone that the telephone receiver of the fixed-line phone is picked up, but the user neither performs the dialing operation nor performs other operations such as voice communication in a preset period, and the fixed-line phone enters a mute energy-saving state after playing a howler tone for the preset period.

The ringing state refers to the state that the telephone receiver is not picked up when a call is incoming, and the fixed-line phone rings to remind the user that there is an incoming call.

The on-hook state refers to the state that the telephone receiver of the fixed-line phone compacts a hookswitch, that is, the state that the fixed-line phone is reset.

Specifically, the process in which the digital terminal device determines that the state of the fixed-line phone is the parking state includes:
If the telephone receiver of the fixed-line phone is picked up, and when the telephone receiver is picked up, no incoming request is received, the state of the fixed-line phone is set to the off-hook state and timing is started.

In the timing process, the digital terminal device sends, to the fixed-line phone, a sound reminding the user to hang up the phone, such as a busy tone, or the howler tone.

If when a timing result of the timing does not reach the preset period, the fixed-line phone sends a reset request, for example, hanging up the phone by the user, the digital terminal device modifies a state value of the fixed-line phone from a state value of the off-hook state to a state value of the on-hook state.

If when the timing result of the timing does not reach the preset period, the fixed-line phone sends an outgoing request, for example, performing a dialing operation by the user, the digital terminal device modifies the state value of the fixed-line phone from the state value of the off-hook state to a state value of the dialing state.

If the timing result of the timing reaches the preset period, and neither the reset request nor the outgoing request is sent in this period, the digital terminal device sets the state of the fixed-line phone to the parking state.

In this embodiment, an operation of the user on the fixed-line phone may trigger the digital terminal device to modify the state of the fixed-line phone, and every different state of the fixed-line phone corresponds to a state value. When the fixed-line phone is switched from one state to another state, the digital terminal device modifies the state value of the fixed-line phone. As shown in Table 1, Table 1 shows a correspondence between a current state of the fixed-line phone and a state value of the fixed-line phone stored in the digital terminal device.

**Table 1**

| **State of the fixed-line phone** | **State value of the fixed-line phone** |
|---|---|
| off-hook state | 1 |
| Dialing state | 2 |
| Conversation state | 3 |
| Parking state | 4 |
| Ringing state | 5 |
| Idle state | 0 |

It may be seen from the foregoing table that the fixed-line phone in different states corresponds to different state values. When the fixed-line phone is migrated from one state to another state, the digital terminal device modifies a current state value of the fixed-line phone. When the telephone receiver is picked up, the user performs dialing, conversation and other operations. In this embodiment, the state of the fixed-line phone is migrated from the off-hook state to the dialing state, the conversation state, the parking state and the like. Further, when the telephone receiver compacts the hookswitch, the state of the fixed-line phone is migrated from the current state (which may be the conversation state and the like) to the idle state. In short, after different operations of the user, the state of the fixed-line phone is migrated from one state to another state.

Exemplarily, the current fixed-line phone is in the idle state, and the state value of the fixed-line phone stored in the digital terminal device is 0; when the user performs a hook-off operation, the digital terminal device modifies the state value of the fixed-line phone from 0 to 1; and when the fixed-line phone enters the parking state, the digital terminal device modifies the state value of the fixed-line phone from 1 to 4.

Each time the incoming request is received, the digital terminal device queries the current state value of the fixed-line phone, and processes the incoming request properly.

When it is queried that the current state value of the fixed-line phone is 0, which indicates that the current fixed-line phone is in the idle state, the digital terminal device performs processing according to a normal procedure. For example, a communication resource is allocated to a current incoming request, and an appropriate feeding current is provided for the fixed-line phone, so as to provide a normal voice service.

When it is queried that the current state value of the fixed-line phone is 1, 2, 3 or 5, which indicates that the current fixed-line phone is in the busy state, the digital terminal device replies to a network side with "being busy" signaling, so that it is convenient for the calling party to perform corresponding processing.

When it is queried that the current state value of the fixed-line phone is 3, which indicates that the current fixed-line phone is in the parking state, the digital terminal device allocates the communication resource to the incoming request, sends the prompt tone used to remind the user of an incoming call, to the fixed-line phone, and feeds back an answer message indicating that the incoming request is successfully accessed to the calling party.

Moreover, when the fixed-line phone is in different states, a current in the fixed-line phone changes, which is specifically as follows: After the fixed-line phone is picked up, a loop is formed between the digital terminal device and the fixed-line phone. After the digital terminal device provides a current for the fixed-line phone, the fixed-line phone works normally. After the phone is picked up, and when the fixed-line phone is in different states such as the dialing state, the conversation state, and the parking state, the current provided by the digital terminal device to the fixed-line phone varies continuously. When the fixed-line phone is in the parking state, the digital terminal device has released the communication resource allocated to the fixed-line phone. In addition, to save energy and reduce consumption, the digital terminal device has reduced the current supplied to the fixed-line phone. Therefore, in the parking state, although the telephone receiver of the fixed-line phone is picked up, a current value of the current of the fixed-line phone is relatively small, compared with those in the dialing state and the conversation state. When the fixed-line phone is in the on-hook state, the digital terminal device breaks the loop formed between the digital terminal device and the fixed-line phone, and the current of the fixed-line phone is zero.

Therefore, besides allocating the communication resource, to ensure that the fixed-line phone works normally, a supply current between the digital terminal device and the fixed-line phone further needs to be increased. Refer to the prior art for the process of allocating the communication resource and increasing the supply current, and details are not described in this embodiment.

It should be noted that, to save energy and reduce consumption, a great quantity of existing chips have a sleep function, which refers to that when a chip does not work, the supply current of the chip is reduced to reduce energy consumption. When the chip needs to work, the chip is woken again. In this embodiment, allocation of the communication resource by the digital terminal device is mainly implemented by means of a chip in the digital terminal device. Therefore, if the chip is in a sleep state, the digital terminal device first needs to wake the chip before the digital terminal device allocates the communication resource.

In the prior art, when the fixed-line phone is in the parking state, the incoming request cannot be successfully accessed. In this method, when the digital terminal device receives the incoming request, the digital terminal device first checks the state of the fixed-line phone, and even if the fixed-line phone is in the parking state, the incoming request can still be accessed.

On the basis that the digital terminal device allocates a communication resource for a current incoming request, and provides an appropriate working current to the fixed-line phone, the digital terminal device sends a prompt tone to the fixed-line phone according to the preset period, where the prompt tone is used to indicate that there is an incoming call after the fixed-line phone enters the parking state. At the same time, the digital terminal device further feeds back an answer message used to indicating that the incoming request is normally accessed to the calling party, so as to notify the calling party that this incoming request is successfully accessed.

Specifically, in an implementation manner of this embodiment, the digital terminal device sends a prompt tone of the preset period, to a local fixed-line phone. Because in the parking state, the telephone receiver of the fixed-line phone is picked up, the prompt tone is played by the telephone receiver after being amplified by the fixed-line phone. The prompt tone is similar to a ring back tone (which is a sound that the calling party hears from a telephone receiver when a call succeeds and a called party does not pick up the phone). Preferably, the prompt tone is a howler tone, and the preset period is equal to a period of a normal phone ringing, which is 3 minutes. Compared with the ring back tone that is usually of 450 Hz and has a tempo of 1:4, the prompt tone in this embodiment is the howler tone of 950 Hz, and has a tempo of 1:2 (on for 1s, and off for 2s). In this case, the use of the howler tone that has the tempo of 1:2 and has a frequency of 950 Hz can draw attention of the user in the greatest degree, and does not elicit disgust of the user to the sound. The prompt tone may be set according to a requirement.

In another implementation manner of this embodiment, the digital terminal device instructs an indicator on the fixed-line phone to flicker, to remind the user that there is an incoming call.

Optionally, if the fixed-line phone supports a caller ID display function, the digital terminal device in this embodiment may send caller ID display information to the fixed-line phone.

On a user side, if the user hears a prompt tone of an incoming call or sees flickering of the indicator, because the telephone receiver is picked up in the parking state, the user needs first to perform a telephone receiver reset operation to answer the call normally. For example, the user may answer the call by pressing a recall button (an R button on the fixed-line phone) or pressing a hookswitch. Alternatively, the user may directly hang up the phone (compacting the hookswitch by using the telephone receiver). In this way, after the phone is hung up, the fixed-line phone immediately utters a ringing tone, and the user may answer the call as the user does in a normal processing procedure.

If the user does not hang up the phone at the end of the conversation, the digital terminal device sends a 40s-busy tone to the fixed-line phone, and continually plays a 60s-howler tone that reminds the user to hang up the phone. If the user still does not hang up the phone after the digital terminal device has sent the 60s-howler tone to the fixed-line phone, the fixed-line phone reenters the parking state.

According to the incoming call processing method provided in this embodiment, when an incoming request is received, a current state of the fixed-line phone is determined first; even if the fixed-line phone is in a parking state, a communication resource is still allocated to the fixed-line phone; a prompt tone is sent to the fixed-line phone; and an answer message used to indicate that the incoming request is successfully accessed is fed back to the calling party. Compared with the prior art in which when the fixed-line phone is in the parking state, the fixed-line phone is in a "busy" state, and the incoming request cannot be accessed, this embodiment can ensure that the incoming request can still be accessed when the fixed-line phone is in the parking state.

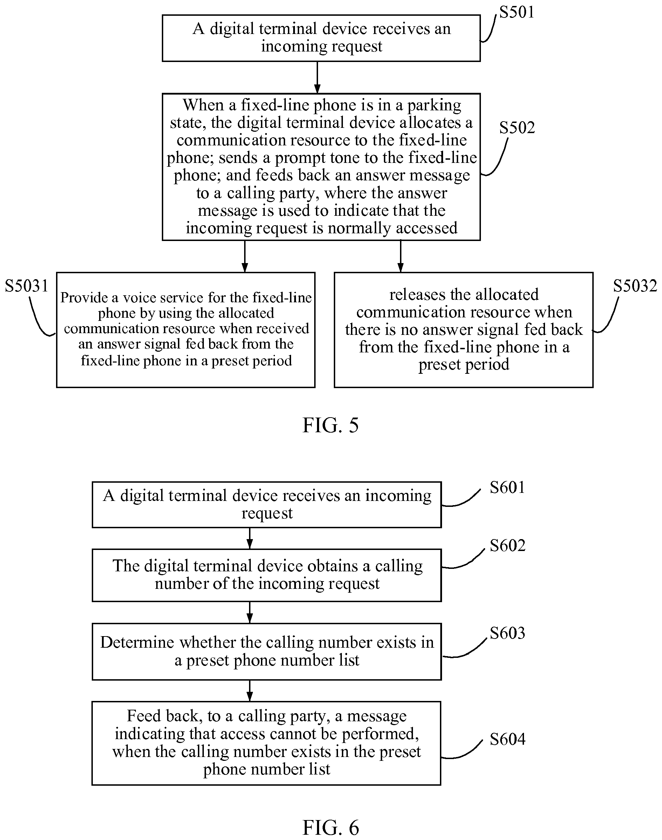

Further, as a supplement to the method shown in FIG. 4, an embodiment of the present invention further provides an incoming call processing method. As shown in FIG. 5, the method includes:
S501: A digital terminal device receives an incoming request.
S502: When a fixed-line phone is in a parking state, the digital terminal device allocates a communication resource to the fixed-line phone; sends a prompt tone to the fixed-line phone; and feeds back an answer message to a calling party, where the answer message is used to indicate that the incoming request is normally accessed.
   For specific implementation processes of step S501 and step S502, refer to implementation processes of step S401 and step S402.
S5031: Provide a voice service for the fixed-line phone by using the allocated communication resource when received an answer signal fed back from the fixed-line phone in a preset period.
   If a user hears a howler tone uttered by the fixed-line phone or sees flickering of an indicator on the fixed-line phone, and answers a call normally, the allocated communication resource is used to provide a normal voice service for the fixed-line phone.
S5032: releases the allocated communication resource when there is no answer signal fed back from the fixed-line phone in a preset period.

In the preset period, if the user still does not normally answer a call, the call setup is automatically released due to no answer from a called party. For the process, refer to the prior art. In this embodiment, in order that when there is an incoming request again, an access success rate of the incoming request is raised, the digital terminal device releases the allocated communication resource, that is, resets the state of the fixed-line phone to the parking state. After the parking state is entered, when there is an incoming request, refer to the method shown in FIG. 4 for an operation procedure of this embodiment. Moreover, if a chip has a sleep consumption-reducing function, after the parking state is entered, the chip that performs processing such as the communication resource allocation enters a sleep state.

To increase flexibility of access of the incoming request provided in this embodiment, the user is enabled to access or reject the incoming request selectively. Further, as a supplement to the methods shown in FIG. 4 and FIG. 5, an embodiment of the present invention further provides an incoming call processing method. As shown in FIG. 6, the method includes:
S601: A digital terminal device receives an incoming request.
S602: The digital terminal device obtains a calling number of the incoming request.
   When the incoming request is received, in this method, a communication resource is not allocated first; and instead, the calling number of the incoming request is obtained first, and the number is determined and parsed.
S603: Determine whether the calling number exists in a preset phone number list, where the preset phone number list is used to record a nuisance call.
S604: Feed back, to a calling party, a message indicating that access cannot be performed, when the calling number exists in the preset phone number list.

The preset phone number list is used to record the nuisance call. The preset phone number list may be obtained after the digital terminal device collects statistics on a quantity of times of answering or rejecting on each calling number of the user. When a quantity of times of rejecting on a number exceeds a set threshold, the number is set to the nuisance call.

Moreover, the preset phone number list may be determined after the user sets the digital terminal device. For example, the user may log in to a website used to manage the digital terminal device. The website includes configuration options that the user may operate, and the user may modify information about the configuration options. For example, the configuration options include an option that is to reject all incoming requests after the parking state, so that after the user chooses the option, and when the fixed-line phone is in the parking state, all the incoming requests are rejected according to the method. Only after the user hangs up the phone, the incoming requests may be processed according to a normal processing procedure.

The method may meet a personalized requirement that some users reject an incoming call by putting the fixed-line phone in the parking state.

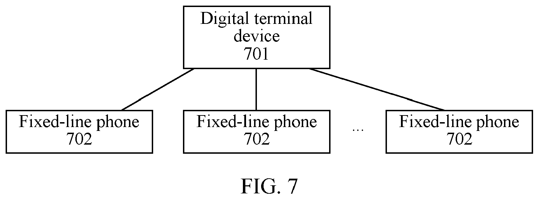

In an implementation manner of the foregoing methods, an embodiment of the present invention further provides a fixed-line phone communications system. As shown in FIG. 7, the system includes a digital terminal device 701 and a fixed-line phone 702 connected to the digital terminal device 701, and the fixed-line phone 702 performs voice communication by using the digital terminal device 701.

Further, one digital terminal device 701 may also be connected to multiple fixed-line phones 702, and the foregoing methods are applied to the digital terminal device 701. Each fixed-line phone 702 and the digital terminal device 701 may be connected by using an RJ11 port, and one digital terminal device 701 may be provided with multiple RJ11 ports, so that one digital terminal device 701 may be connected to multiple fixed-line phones 702.

According to the incoming call processing system provided in this embodiment, when an incoming request is received by the digital terminal device, a current state of the fixed-line phone is determined first; even if the fixed-line phone is in a parking state, a communication resource is still allocated to the fixed-line phone; a prompt tone is sent to the fixed-line phone; and an answer message is fed back to the calling party. Compared with the prior art in which when the fixed-line phone is in the parking state, the fixed-line phone is in a "busy" state, and the incoming request cannot be accessed, this embodiment can ensure that the incoming request can still be accessed when the fixed-line phone is in the parking state.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention, which is defined by the appended claims.

## Claims

1. An incoming call processing apparatus, wherein the apparatus is applied to a digital terminal device, the digital terminal device is located in a fixed-line phone communications system, the fixed-line phone communications system comprises a fixed-line phone and the digital terminal device connected to the fixed-line phone, and the fixed-line phone performs voice communication by using the digital terminal device, the apparatus comprising:
a network module (101), configured to receive an incoming request; and
a processor (103), configured to: determine whether the fixed-line phone is in a parking state when the network module received an incoming request; and when the fixed-line phone is in the parking state, the processor (103) configured to: allocate a communication resource to the fixed-line phone, send a prompt tone to the fixed-line phone, and feed back an answer message to a calling party of the incoming request, wherein the answer message is used to indicate that the incoming request is normally accessed;
**characterized in that**
the processor (103) is further configured to: obtain a calling number of the incoming request, and feed back a busy signal to the calling party when the calling number exists in a preset phone number list.

2. The incoming call processing apparatus according to claim 1, wherein
the processor (103) is further configured to: provide a voice service for the fixed-line phone by using the allocated communication resource when received an answer signal fed back from the fixed-line phone in a preset period; or
release the allocated communication resource when there is no answer signal fed back from the fixed-line phone in a preset period.

3. An incoming call processing method, wherein the method relates to a fixed-line phone communications system, the system comprises a fixed-line phone and a digital terminal device connected to the fixed-line phone, the fixed-line phone performs voice communication by using the digital terminal device, and the method is applied to the digital terminal device, the method comprising:
receiving (S401), by the digital terminal device, an incoming request; and
when the fixed-line phone is in a parking state, allocating (S402), by the digital terminal device, a communication resource to the fixed-line phone; sending, by the digital terminal device, a prompt tone to the fixed-line phone; and feeding back, by the digital terminal device, an answer message to a calling party, wherein the answer message is used to indicate that the incoming request is normally accessed;
wherein after the receiving, by the digital terminal device, an incoming request, the method is **characterized by**
obtaining (S602), by the digital terminal device, a calling number of the incoming request;
determining (S603), by the digital terminal device, whether the calling number exists in a preset phone number list, wherein the preset phone number list is used to record a nuisance call; and
feeding back (S604), by the digital terminal device, a busy signal to the calling party when the calling number exists in the preset phone number list.

4. The incoming call processing method according to claim 3, wherein after the sending, by the digital terminal device, a prompt tone to the fixed-line phone, the method further comprises:
providing (S5031), by the digital terminal device, a voice service for the fixed-line phone by using the allocated communication resource when received an answer signal fed back from the fixed-line phone in a preset period; or
releasing (S5032), by the digital terminal device, a allocated communication resource when there is no answer signal fed back from the fixed-line phone in a preset period.

5. A computer readable medium, wherein the computer readable medium store a program, and when the program is executed, steps of the method according to claim 3 or 4 are performed.

## Patentansprüche

1. Vorrichtung zum Verarbeiten eingehender Anrufe, wobei die Vorrichtung an einem digitalen Endgerät zur Anwendung kommt, wobei sich das digitale Endgerät in einem Festnetztelefon-Kommunikationssystem befindet, wobei das Festnetztelefon-Kommunikationssystem ein Festnetztelefon und das digitale Endgerät, das mit dem Festnetztelefon verbunden ist, umfasst und wobei das Festnetztelefon Sprachkommunikation unter Verwendung des digitalen Endgeräts ausführt, wobei die Vorrichtung umfasst:
ein Netzmodul (101), das dafür ausgelegt ist, eine eingehende Anforderung zu empfangen; und
einen Prozessor (103), der dafür ausgelegt ist: zu bestimmen, ob das Festnetztelefon in einem Parkzustand ist, wenn das Netzmodul eine eingehende Anforderung empfängt; und wenn das Festnetztelefon im Parkzustand ist, ist der Prozessor (103) dafür ausgelegt: dem Festnetztelefon eine Kommunikationsressource zuzuteilen, einen Aufforderungston an das Festnetztelefon zu senden und eine Antwortnachricht an einen rufenden Teilnehmer der eingehenden Anforderung zurückzusenden, wobei die Antwortnachricht dazu dient anzuzeigen, dass auf die eingehende Anforderung normal zugegriffen wird;
**dadurch gekennzeichnet, dass**
der Prozessor (103) ferner dafür ausgelegt ist: eine rufende Nummer der eingehenden Anforderung zu erhalten und ein Besetztsignal an den rufenden Teilnehmer zurückzusenden, wenn die rufende Nummer in einem voreingestellten Telefonnummernverzeichnis vorhanden ist.

2. Vorrichtung zum Verarbeiten eingehender Anrufe gemäß Anspruch 1, wobei
der Prozessor (103) ferner dafür ausgelegt ist: einen Sprachdienst für das Festnetztelefon bereitzustellen, unter Verwendung der zugeteilten Kommunikationsressource, wenn ein Antwortsignal, das vom Festnetztelefon zurückgesendet wurde, innerhalb eines voreingestellten Zeitraums empfangen wird; oder
die zugeteilte Kommunikationsressource auszulösen, wenn kein Antwortsignal vom Festnetztelefon innerhalb eines voreingestellten Zeitraums zurückgesendet wird.

3. Verfahren zum Verarbeiten eingehender Anrufe, wobei das Verfahren ein Festnetztelefon-Kommunikationssystem betrifft, wobei das System ein Festnetztelefon und ein digitales Endgerät, das mit dem Festnetztelefon verbunden ist, aufweist, das Festnetztelefon Sprachkommunikation unter Verwendung des digitalen Endgeräts ausführt und das Verfahren am digitalen Endgerät zur Anwendung kommt, wobei das Verfahren umfasst:
Empfangen (S401), durch das digitale Endgerät, einer eingehenden Anforderung; und
wenn das Festnetztelefon in einem Parkzustand ist, Zuteilen (S402), durch das digitale Endgerät, einer Kommunikationsressource an das Festnetztelefon; Senden, durch das digitale Endgerät, eines Aufforderungstons an das Festnetztelefon; und
Zurücksenden, durch das digitale Endgerät, einer Antwortnachricht an einen rufenden Teilnehmer, wobei die Antwortnachricht dazu dient anzuzeigen, dass auf die eingehende Anforderung normal zugegriffen wird;
wobei nach dem Empfangen, durch das digitale Endgerät, einer eingehenden Anforderung das Verfahren **gekennzeichnet ist durch**
Erhalten (S602), durch das digitale Endgerät, einer rufenden Nummer der eingehenden Anforderung;
Bestimmen (S603), durch das digitale Endgerät, ob die rufende Nummer in einem voreingestellten Telefonnummernverzeichnis vorhanden ist, wobei das voreingestellte Telefonnummernverzeichnis dazu dient, einen belästigenden Anruf aufzuzeichnen; und
Zurücksenden (S604), durch das digitale Endgerät, eines Besetztsignals an den rufenden Teilnehmer, wenn die rufende Nummer im voreingestellten Telefonnummernverzeichnis vorhanden ist.

4. Verfahren zum Verarbeiten eingehender Anrufe gemäß Anspruch 3, wobei nach dem Senden, durch das digitale Endgerät, eines Aufforderungstons an das Festnetztelefon das Verfahren ferner umfasst:
Bereitstellen (S5031), durch das digitale Endgerät, eines Sprachdienstes für das Festnetztelefon unter Verwendung der zugeteilten Kommunikationsressource, wenn ein Antwortsignal, das vom Festnetztelefon zurückgesendet wurde, innerhalb eines voreingestellten Zeitraums empfangen wird; oder
Auslösen (S5032), durch das digitale Endgerät, einer zugeteilten Kommunikationsressource, wenn kein Antwortsignal vom Festnetztelefon innerhalb eines voreingestellten Zeitraums zurückgesendet wird.

5. Computerlesbares Medium, wobei das computerlesbare Medium ein Programm speichert, und wenn das Programm ausgeführt wird, werden Schritte des Verfahrens gemäß Anspruch 3 oder 4 ausgeführt.

## Revendications

1. Appareil de traitement d'appel entrant, l'appareil étant appliqué à un dispositif terminal numérique, le dispositif terminal numérique étant situé dans un système de communications téléphoniques à ligne fixe, le système de communications téléphoniques à ligne fixe comprenant un téléphone fixe et le dispositif terminal numérique connecté au téléphone fixe, et le téléphone fixe exécutant une communication vocale au moyen du dispositif terminal numérique, l'appareil comprenant :
un module de réseau (101), configuré pour recevoir une requête entrante ; et
un processeur (103), configuré pour : déterminer si le téléphone fixe est dans un état raccroché lorsque le module de réseau a reçu une requête entrante ; et lorsque le téléphone fixe est dans l'état raccroché, le processeur (103) est configuré pour : attribuer une ressource de communication au téléphone fixe, envoyer une tonalité d'invite au téléphone fixe et retourner un message de réponse à une partie appelante de la requête entrante, le message de réponse étant utilisé pour indiquer que la requête entrante est normalement accessible ;
**caractérisé en ce que**
le processeur (103) est en outre configuré pour : obtenir un numéro appelant de la requête entrante, et retourner un signal occupé à la partie appelante lorsque le numéro appelant existe dans une liste de numéros de téléphone prédéfinie.

2. Appareil de traitement d'appel entrant selon la revendication 1, dans lequel le processeur (103) est en outre configuré pour : fournir un service vocal pour le téléphone fixe à l'aide de la ressource de communication attribuée lorsqu'il a reçu un signal de réponse retourné par le téléphone fixe pendant une période prédéfinie ; ou libérer la ressource de communication attribuée lorsqu'aucun signal de réponse n'est retourné par le téléphone fixe pendant une période prédéfinie.

3. Procédé de traitement d'appel entrant, le procédé étant associé à un système de communications téléphoniques à ligne fixe, le système comprenant un téléphone fixe et un dispositif terminal numérique connecté au téléphone fixe, le téléphone fixe exécutant une communication vocale au moyen du dispositif terminal numérique, et le procédé étant appliqué au dispositif terminal numérique, le procédé comprenant :
la réception (S401), par le dispositif terminal numérique ; d'une requête entrante ; et
lorsque le téléphone fixe est dans un état raccroché, l'attribution (S402), par le dispositif terminal numérique, d'une ressource de communication au téléphone fixe ;
l'envoi, par le dispositif terminal numérique, d'une tonalité d'invite au téléphone fixe ; et le retour, par le dispositif terminal numérique, d'un message de réponse à une partie appelante, le message de réponse étant utilisé pour indiquer que la requête entrante est normalement accessible ;
le procédé étant **caractérisé par**, après la réception, par le terminal numérique, d'une requête entrante,
l'obtention (S602), par le dispositif terminal numérique, d'un numéro appelant de la requête entrante ;
la détermination (S603), par le dispositif terminal numérique, du fait de savoir si le numéro appelant existe dans une liste de numéros de téléphone prédéfinie, la liste de numéros de téléphone prédéfinie étant utilisée pour enregistrer un appel indésirable ; et
le retour (S604), par le dispositif terminal numérique, d'un signal occupé à la partie appelante lorsque le numéro appelant existe dans la liste de numéros de téléphone prédéfinie.

4. Procédé de traitement d'appel entrant selon la revendication 3, le procédé comprenant en outre, après l'envoi, par le dispositif terminal numérique, d'une tonalité d'invite au téléphone fixe :
la fourniture (S5031), par le dispositif terminal numérique, d'un service vocal pour le téléphone fixe à l'aide de la ressource de communication attribuée lorsqu'il a reçu un signal de réponse retourné depuis le téléphone fixe pendant une période prédéfinie ; ou
la libération (S5032), par le dispositif terminal numérique, d'une ressource de communication attribuée lorsqu'aucun signal de réponse n'est retourné depuis le téléphone fixe pendant une période prédéfinie.

5. Support lisible par ordinateur, le support lisible par ordinateur stockant un programme, et lorsque le programme est exécuté, les étapes du procédé selon les revendications 3 ou 4 sont exécutées.
